(19) Europäisches Patentamt
European Patent Office
Office européen des brevets

(11) **EP 3 543 836 A1**

(12) **EUROPEAN PATENT APPLICATION**

(43) Date of publication:
**25.09.2019 Bulletin 2019/39**

(51) Int Cl.:
***G06F 3/0484*** (2013.01)     ***G06F 3/0488*** (2013.01)

(21) Application number: **19154853.6**

(22) Date of filing: **31.01.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2018   JP 2018051836**

(71) Applicant: **Ricoh Company, Ltd.**
**Tokyo 143-8555 (JP)**

(72) Inventors:
• **HATANAKA, Hiroatsu**
 **Ohta-ku, Tokyo 143-8555 (JP)**
• **SHIBUKAWA, Tomoki**
 **Ohta-ku, Tokyo 143-8555 (JP)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(54) **OPERATION APPARATUS, IMAGE FORMING APPARATUS AND METHOD OF DISPLAYING SCREEN**

(57)     An operation apparatus (20) includes a display (27) configured to display a screen to include a plurality of input fields to receive an input of field information into each of the plurality of input fields, and a processor (21) configured to receive a selection of a first input field selected from the plurality of input fields, the first input field to be input with first field information using a software keyboard displayable on the screen, determine a second input field associated with the first input field selected from the plurality of input fields, and display, in response to receiving the selection of the first input field, the software keyboard, the first input field that is required to be input with the first field information and the second input field that is required to be input with second field information together on the screen without being hidden by the software keyboard being displayed on the screen.

FIG. 9

EP 3 543 836 A1

## Description

BACKGROUND

Technical Field

This disclosure relates to an operation apparatus, an image forming apparatus, and a method of displaying a screen.

Background Art

A software keyboard can be provided on displays having a limited physical size so that users can input information into one or more input fields included in a screen displayed on the displays.

When inputting information into multiple input fields using the software keyboard, after information is input to a first input field, the software keyboard is closed to select a second input field, the second input field is then selected, and then the software keyboard is displayed again to complete the inputting into the multiple input fields, which is time consuming.

To solve this issue, a technique is disclosed in JP-2016-177816-A, in which a key for receiving an instruction for changing an input field (input object) to the next input field is displayed together with a software keyboard.

However, in the technique disclosed in JP-2016-177816-A, the sequential order of input fields that transit according to the key operation on the software keyboard is pre-set. That is, in the technology disclosed in JP-2016-177816-A, even if a certain input field is not required to be input with field information, the certain input field is displayed.

SUMMARY

As one aspect of the present invention, an operation apparatus is devised. The operation apparatus includes a display configured to display a screen to include a plurality of input fields to receive an input of field information into each of the plurality of input fields, and circuitry configured to receive a selection of a first input field selected from the plurality of input fields, the first input field to be input with first field information using a software keyboard displayable on the screen, determine a second input field associated with the first input field selected from the plurality of input fields, and display, in response to receiving the selection of the first input field, the software keyboard, the first input field that is required to be input with the first field information and the second input field that is required to be input with second field information together on the screen without being hidden by the software keyboard being displayed on the screen.

As another aspect of the present invention, an image forming apparatus is devised. The image forming apparatus includes an operation apparatus. The operation apparatus includes a display configured to display a screen to include a plurality of input fields to receive an input of field information into each of the plurality of input fields, and circuitry configured to receive a selection of a first input field selected from the plurality of input fields, the first input field to be input with first field information using a software keyboard displayable on the screen, determine a second input field associated with the first input field selected from the plurality of input fields, and display, in response to receiving the selection of the first input field, the software keyboard, the first input field that is required to be input with the first field information and the second input field that is required to be input with second field information together on the screen without being hidden by the software keyboard being displayed on the screen.

As another aspect of the present invention, a method of displaying a screen to include a plurality of input fields to receive an input of field information into each of the plurality of input fields is devised. The method includes receiving a selection of a first input field selected from the plurality of input fields, the first input field to be input with first field information using a software keyboard displayable on the screen, determining a second input field associated with the first input field selected from the plurality of input fields, and displaying, in response to receiving the selection of the first input field, the software keyboard, the first input field that is required to be input with the first field information and the second input field that is required to be input with second field information together on the screen without being hidden by the software keyboard being displayed on the screen.

As to the above aspects of the present invention, a plurality of input fields that requires an input of field information can be displayed with a software keyboard on the same screen without being hidden by the software keyboard being displayed on the same screen or without interfering with the software keyboard.

BRIEF DESCRIPTION OF THE DRAWINGS

A more complete appreciation of the description and many of the attendant advantages and features thereof can be readily obtained and understood from the following detailed description with reference to the accompanying drawings, wherein:

FIG. 1 is an example of a hardware block diagram of a multifunction peripheral (MFP) according to a first embodiment of the present invention;
FIG. 2 is an example of a software configuration of the MFP of FIG. 1;
FIG. 3 is an example of software programs installed on the MFP of FIG. 1;
FIG. 4 is a functional block diagram of a home application;
FIG. 5 is an example of a table for managing a plurality of pieces of information as one group;

FIG. 6 is an example of a sequence diagram illustrating a flow of an operation of each unit when displaying a registration screen;

FIG. 7 illustrates an example of a registration screen;

FIG. 8 illustrates an example of a method of determining a display format on a screen;

FIG. 9 illustrates another example of a registration screen;

FIG. 10 illustrates still another example of a registration screen;

FIG. 11 illustrates an example of a registration screen according to a second embodiment;

FIG. 12 illustrates am example of hypertext markup language (HTML) description for input fields illustrated in FIG. 11; and

FIG. 13 illustrates an example of a registration screen according to the second embodiment.

The accompanying drawings are intended to depict embodiments of the present invention and should not be interpreted to limit the scope thereof. The accompanying drawings are not to be considered as drawn to scale unless explicitly noted.

DETAILED DESCRIPTION

A description is now given of exemplary embodiments of the present invention. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Hereinafter, a description is given of an operation apparatus, an image forming apparatus, and a method of displaying a screen of an embodiment by referring to the accompanying drawings.

First Embodiment:

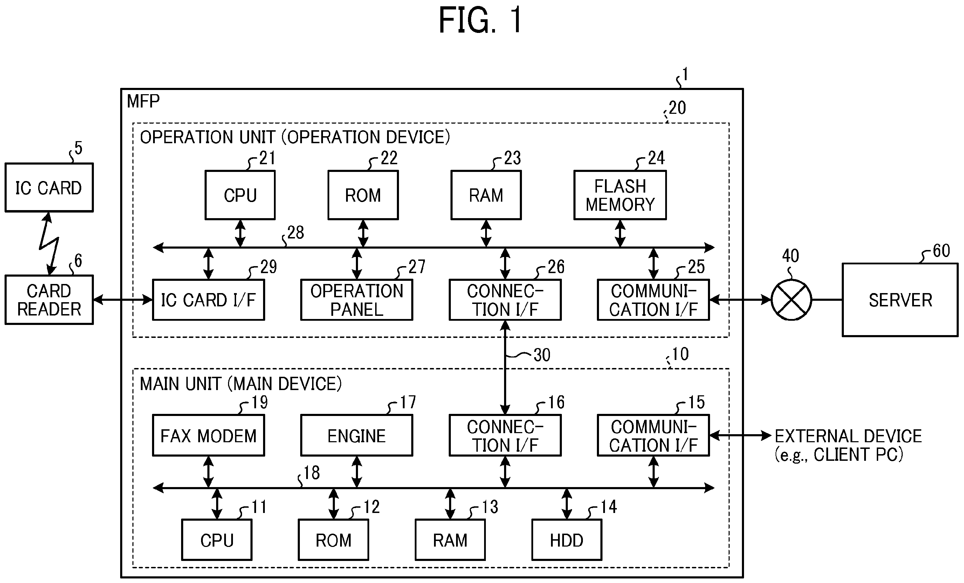

FIG. 1 is an example of a hardware block diagram of a multifunction peripheral (MFP) 1 according to a first embodiment. The MFP 1 is an example of image forming apparatuses. As illustrated in FIG. 1, the MFP 1 includes, for example, a main unit 10 (main device or apparatus) and an operation unit 20 (operation device or apparatus). The main unit 10 includes, for example, an image processing unit that can perform various image processing functions, such as a copier function, a scanner function, a facsimile function, a printer function, and the like. The operation unit 20 includes, for example, a display that displays various information and receives an input corresponding to an operation of a user, such as the display displays a screen including a plurality of input fields and receives an input of field information into each of the plurality of input fields.

The main unit 10 and the operation unit 20 are communicatively connected to each other through a dedicated communication channel 30. The communication channel 30 can be, for example, a channel using the universal serial bus (USB) standard. Further, the communication channel 30 can use any wired or wireless standard. Further, the main unit 10 can include any one of the functions of image forming functions such as a copier function, a scanner function, a facsimile function, a printer function, or the like, or can include a plurality of functions.

The operation unit 20 can be implemented using an electronic apparatus or device that can perform an information processing entirely. For example, the information processing terminal such as a smart phone or a tablet type terminal can be used as the operation unit 20. In this case, the information processing terminal used as the operation unit 20 can function as an operation unit of the MFP 1.

More specifically, in the MFP 1, a dedicated operation panel is conventionally fixed and installed as the operation unit. On the other hand, the information processing terminal used as the operation unit 20 of the MFP 1 of the first embodiment can be detachably mounted to the main unit 10 of the MFP 1. That is, when the information processing terminal used as the operation unit 20 can be detachably mounted on the MFP 1, the information processing terminal used as the operation unit 20 can be disposed at a given position of the MFP 1 as an operation panel and can be detached from the given position. Therefore, the information processing terminal used as the operation unit 20 and the MFP 1 can be considered as one apparatus when the operation unit 20 is mounted on the MFP 1. When the information processing terminal used as the operation unit 20 is detached from the MFP 1, the information processing terminal performs wireless communication with the MFP 1 using, for example, Bluetooth (registered trademark) or infrared communication to function as the operation unit of the MFP 1.

The main unit 10 performs an operation in accordance with an input received by the operation unit 20. Further, the main unit 10 can also communicate with an external apparatus such as a client personal computer (PC) and also perform operations according to instructions received from the external apparatus. Hardware Configuration of Main Unit:

Hereinafter, a description is given of a hardware configuration of the main unit 10. As illustrated in FIG. 1, the main unit 10 includes, for example, a central processing unit (CPU) 11, a read only memory (ROM) 12, a random access memory (RAM) 13, and a hard disk drive (HDD) 14. The main unit 10 further includes, for example, a communication interface (I/F) 15, a connection interface (I/F) 16, an engine 17, and a facsimile modem 19 (FAX modem 19). The above described units 11 to 17 and the FAX modem 19 are connected to each other via a system bus 18.

The CPU 11 controls the operation of the main unit 10 in a coordinated manner. The CPU 11 executes one or more programs stored in the ROM 12 or HDD 14 using the ROM 13 as a work area to control the operation of the main unit 10 to implement various image forming functions such as a copier function, a scanner function, a facsimile function, a printer function, and the like. Further, the HDD 14 of the main unit 10 can be implemented in the same manner when the flash memory is used.

The communication I/F 15 is an interface for communicating with an external apparatus, such as a client personal computer (PC), a web server, and an authentication server on a network 40. The connection I/F 16 is an interface for communicating with the operation unit 20 via the communication channel 30.

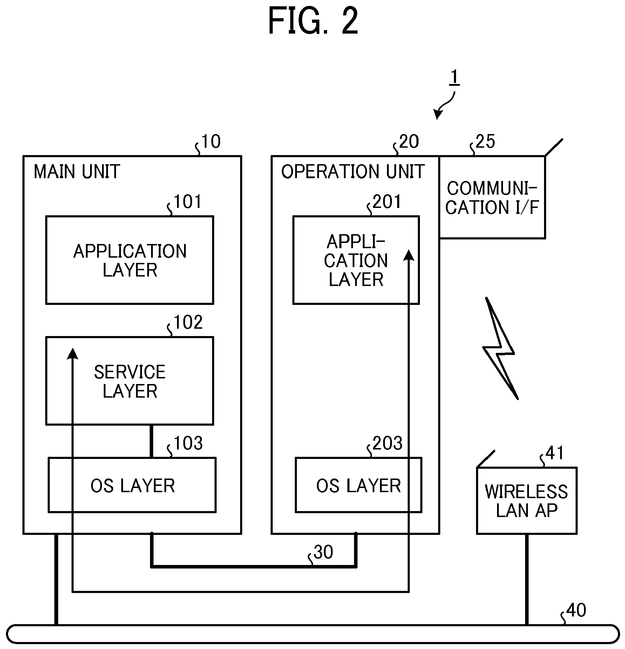

In FIGs. 1 and 2 to be described below, the communication channel 30 is illustrated as a wired line but the operation unit 20 can be mounted on and detached from the main unit 10 of the MFP 1 as described above. Therefore, when the operation unit 20 is attached to the MFP 1, it is assumed that the communication channel 30 functions as a wired communication channel, and when the operation unit 20 is detached from the MFP 1, the communication channel 30 functions as a wireless communication channel.

The engine 17 is a hardware resource that performs various processing for implementing the copier function, scanner function, facsimile function, and printer function other than general-purpose information processing and communication. The engine 17 includes, for example, a scanner for scanning an image of document, a plotter for printing images on a sheet such as paper, a facsimile communication unit for performing facsimile communication, and the like. Further, options such as a finisher that automatically sorts printed sheets and an automatic document feeder (ADF) that automatically feeds document sheets can be provided for the engine 17. Hardware Configuration of Operation Unit:

Hereinafter, a description is given of a hardware configuration of the operation unit 20. As illustrated in FIG. 1, the operation unit 20 includes, for example, a CPU 21, a ROM 22, a RAM 23, a flash memory 24, a communication I/F 25, a connection I/F 26, an operation panel 27, and an integrated circuit (IC) I/F 29 connected to each other via a system bus 28. Further, the flash memory 24 of the operation unit 20 can be implemented similarly by using an HDD.

The CPU 21 controls the operation of the operation unit 20 in a coordinated manner. The CPU 21 executes one or more programs stored in the ROM 22 using the RAM 23 as a work area to control the operation of the operation unit 20 entirely. Further, the CPU 21 executes a user authentication program stored in the ROM 22 or the like to perform a user authentication process. The communication I/F 25 is an interface for communicating with, for example, a server 60 on the network 40. The connection I/F 26 is an interface for communicating with the main unit 10 via the communication channel 30.

The IC card I/F 29 is connected to a card reader 6 via, for example, a USB cable or the like. When a login operation to the MFP 1 is performed, the card reader 6 performs a non-contact wireless communication with an IC card 5, which is operated by a user (non-contact operation) near the card reader 6 to read identification information such as a card ID and user information stored in the IC card 5. In addition to the non-contact operation, the card reader 6 can read the authentication information from the IC card 5 using a contact operation.

Further, while the card reader 6 and the operation unit 20 are connected to each other via a USB cable or the like. Further, the card reader 6 can be embedded in the operation unit 20, in which the operation unit 20 and the card reader 6 can combined with each other as one apparatus or device.

Even if there is a difference in names such as IC card and ID card, the embodiment can be applied to any storage medium, and the scope of the present invention is not limited to the IC card and ID card, or the like. Further, the card reader can be any device capable of reading the user information from the storage medium.

The operation panel 27 is configured using, for example, a liquid crystal display (LCD) having a touch sensor. The operation panel 27 receives various inputs according to a user's operation and displays various types of information, such as information corresponding to the received input, information indicating an operation status of the MFP 1, information indicating a setting state, and the like. Further, the operation panel 27 can be configured using an organic light-emitting diode (OLED) display device provided with a touch sensor. Further, in addition to or alternatively, a display unit such as a hardware key or the like and a lighting unit can be provided to the operation panel 27.

Software Configuration of MFP:

FIG. 2 illustrates an example of a software configuration of the MFP 1. As illustrated in FIG. 2, the main unit 10 includes, for example, an application layer 101, a service layer 102, and an operating system (OS) layer 103. The contents of the application layer 101, the service layer 102, and the OS layer 103 are various software programs stored in the ROM 12, the HDD 14, and the like. The CPU 11 executes these software programs to implement various functions.

The software in the application layer 101 is a control application (hereinafter, simply referred to as "application") for providing given functions by operating a hardware resource. For example, the application includes various applications, such as a copy application for providing a copy function, a scanner application for providing a scanner function, a facsimile application for providing a facsimile function, and a printer application for providing a printer function.

The software in the service layer 102 is a software program that works between the application layer 101 and the OS layer 103 to provide an interface function for the application in the application layer 101 for utilizing the hardware resources included in the main unit 10. Specifically, the software in the service layer 102 provides a function to receive operational requests for the hardware resources and to mediate the operation requests. The operation requests received by the service layer 102 include, for example, a request for scanning by a scanner, a request for printing by a plotter, or the like.

The interface function performed by the service layer 102 is provided not only to the application layer 101 of the main unit 10, but also to the application layer 201 of the operation unit 20. That is, the application layer 201 (application) of the operation unit 20 can also implement one or more functions using the hardware resources (e.g., engine 17) of the main unit 10 through the interface function of the service layer 102.

The software in the OS layer 103 is basic software (operating system) for providing basic functions for controlling the hardware resources included in the main unit 10. The software in the service layer 102 converts a request for using the hardware resources received from various applications into a command that can be interpreted by the OS layer 103, and transfers the commands to the OS layer 103. Then, by performing the command by executing the software in the OS layer 103, the hardware resources can perform one or more operations in accordance with the requests of the applications.

Similarly, the operation unit 20 includes, for example, an application layer 201 and an OS layer 203. The application layer 201 and the OS layer 203 included in the operation unit 20 employs the hierarchical structure that is same as the main unit 10. However, the types of operation requests, which can be received by the functions provided by the applications in the application layer 201 are different from that of the main unit 10. The application in the application layer 201 is a software program for providing a given function by operating the hardware resources included in the operation unit 20. For example, the application in the application layer 201 includes software for providing a function of a user interface (UI) for performing operations and display of the functions included in the main unit 10 such as a copying function, a scanner function, a facsimile function, and a printer function.

Further, in the case of the MFP 1 of the first embodiment, to maintain the independence of the functions, the software in the OS layer 103 of the main unit 10 and the software in the OS layer 203 of the operation unit 20 are different. For example, Linux (registered trademark) is installed as software of the OS layer 103 of the main unit 10 while Android (registered trademark) is installed as software of the OS layer 203 of the operation unit 20. wireless local area network (LAN) co

By operating the main unit 10 and the operation unit 20 using different operating systems, communication between the main unit 10 and the operation unit 20 can be performed as communication between different apparatuses, rather than process-to-process communication within the same apparatus. The communication between different apparatuses includes an operation (command communication) of transmitting an input received by the operation unit 20 (instruction contents input by a user) to the main unit 10, and an operation of notifying an event to the operation unit 20 from the main unit 10. In this example case, when the operation unit 20 performs the command communication with the main unit 10, the function of the main unit 10 can be used. Further, the event notified to the operation unit 20 from the main unit 10 includes, for example, an execution state of an operation in the main unit 10, contents set at the main unit 10, and the like.

Further, in the first embodiment, since the power supply to the operation unit 20 is performed from the main unit 10 via the communication channel 30, the power supply control of the operation unit 20 can be performed independently from the power supply control of the main unit 10.

In this example case, the main unit 10 and the operation unit 20 are electrically and physically connected via the communication channel 30, but the operation unit 20 can be detached from the main unit 10 as described above. In this case, a short-range wireless communication unit such as an infrared communication unit, a radio frequency (RF) communication unit, a Bluetooth (registered trademark) communication unit, or the like is provided on the main unit 10 and the operation unit 20. The RF is an abbreviation for "radio frequency." Alternatively, the main unit 10 and the operation unit 20 can be provided with a wireless local area network (LAN) communication function, such as Wi-Fi (registered trademark), and can communicate with each other via a wireless LAN access point 41 (wireless LAN AP 41) and a network 40 as illustrated in FIG. 2. The LAN is an abbreviation for "local area network." If the operation unit 20 is detachable from the main unit 10, the operation unit 20 stores the electric power supplied from the main unit 10 via the communication channel 30 in a secondary battery. When the operation unit 20 is detached from the main unit 10, the operation unit 20 operates with the electric power stored in the secondary battery 2 to communicate with the main unit 10.

Software of MFP:

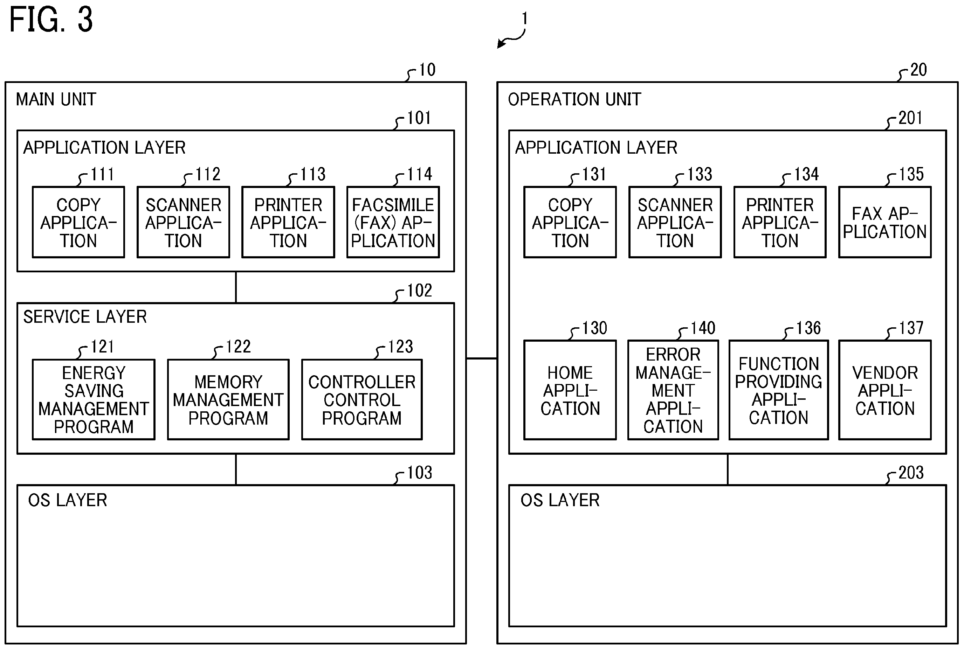

FIG. 3 illustrates an example of software programs installed on the MFP 1. As described above, the main unit 10 is divided into the application layer 101, the service layer 102, and the OS layer 103. The application layer 101 stores, for example, one or more applications that control the engine 17 (FIG. 1) to control the scanning and printing of document. Specifically, the application layer 101 stores, for example, a copy application 111, a scanner application 112, a printer application 113, and a facsimile application 114 (FAX application 114). The copy application 111 to the facsimile application 114 are job execution function applications, installed as standard applications and examples of control applications.

Further, the service layer 102 stores various programs that manage processes commonly performed for each application, such as an energy saving management program 121, a memory management program 122, and a controller control program 123. The service layer 102 performs common processing for each application, such as the energy saving management processing and the memory management processing.

On the other hand, the operation unit 20 is divided into the application layer 201 and the OS layer 203. As to the difference between the application of the main unit 10 and the application of the operation unit 20, the application of the main unit 10 performs the engine control by using the controller control program 123 for controlling the function of the image forming apparatus, such as scanning and printing while the application of the operation unit 20 performs a user interface (UI) control. That is, by performing a screen display using the application of the operation unit 20, the user operation can be received, and the engine control program based on the user operation can be performed by the application (e.g., controller control program 123) of the main unit 10.

The application of the operation unit 20 includes, for example, a vendor application 137 developed by a development vendor for a scanner application 133 or the like.

Further, in order to facilitate the development of the vendor application 137, the application of the operation unit 20 is provided with a function providing application 136 that provides the functions equivalent to a copy application 131 to a FAX application 135 of the operation unit 20 to the development vendor or the like.

That is, the application layer 201 of the operation unit 20 stores one or more applications that receive user operations via a user interface. Specifically, the application layer 201 stores, for example, a home application 130, a copy application 131, a scanner application 133, a printer application 134, a FAX application 135, a function providing application 136, a vendor application 137, and an error management application 140.

The home application 130 displays a main screen (initial screen) on which icons or the like for designating a desired operation are arranged, in which when a user operates an icon, an application specified by the icon is activated. The copy application 131 is an application that receives a copy operation instructed by a user via an operation button and a setting button. The scanner application 133 is an application that receives a scanner operation instructed by the user via an operation button, a setting button, and the like. The printer application 134 is an application that receives a printing operation instructed by a user via an operation button, a setting button, and the like. The FAX application 135 is an application that receives a facsimile transmission/reception operation instructed by a user via an operation button, a setting button, and the like.

The function providing application 136 is an example of an image processing program. The function providing application 136 is stored, for example, in the ROM 22, the RAM 23, and/or the flash memory 24 of the operation unit 20.

In order to facilitate the development of the vendor application 137 as above described, the function providing application 136 provides the functions equivalent to the copy application 131 to the FAX application 135 of the operation unit 20 to a development vendor or the like.

The vendor application 137 is an example of a request application. For example, when the print setting or print execution is performed, the vendor application 137 calls the function providing application 136 related to the printer application 134.

That is, if the function providing application 136 is an application corresponding to, for example, the scanner application 133, the function providing application 136 provides a function of displaying a user interface such as a normal operation menu and a setting menu to the development vendor. Further, in a case that the function providing application 136 is an application corresponding to, for example, the printer application 134, the function providing application 136 provides a function of displaying a user interface such as a normal operation menu and a setting menu to the development vendor.

As above described, the operation unit 20 of the MFP 1 is provided with the function providing application 136 for providing the functions equivalent to the copy application 131 to the FAX application 135 to the development vendor or the like. The application programming interface (API) that implements the function of the function providing application 136 is open to the development vendor of the vendor application 137.

The home application 130 displays, for example, a registration screen for receiving registration of various user information in an initial state. Function of Home Application:

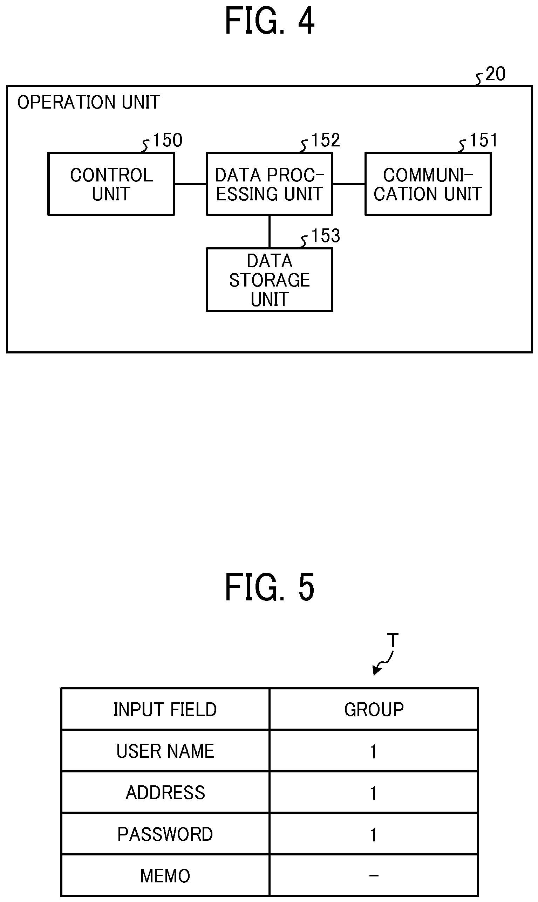

FIG. 4 is a functional block diagram of the home application 130. The CPU 21 of the operation unit 20 executes the home application 130 stored in, for example, the ROM 22, the RAM 23, or the flash memory 24 to implement a control unit 150, a communication unit 151, a data processing unit 152, and a data storage unit 153 illustrated in FIG. 4.

The control unit 150 controls a display of the operation panel 27 and an input from the operation panel 27. Further, the control unit 150 transmits an input from a user to the data processing unit 152 via the operation panel 27.

The communication unit 151 communicates with the controller control program 123 of the main unit 10 to exchange data.

The data processing unit 152 interprets a user operation input via the control unit 150 and generates data corresponding to the user operation.

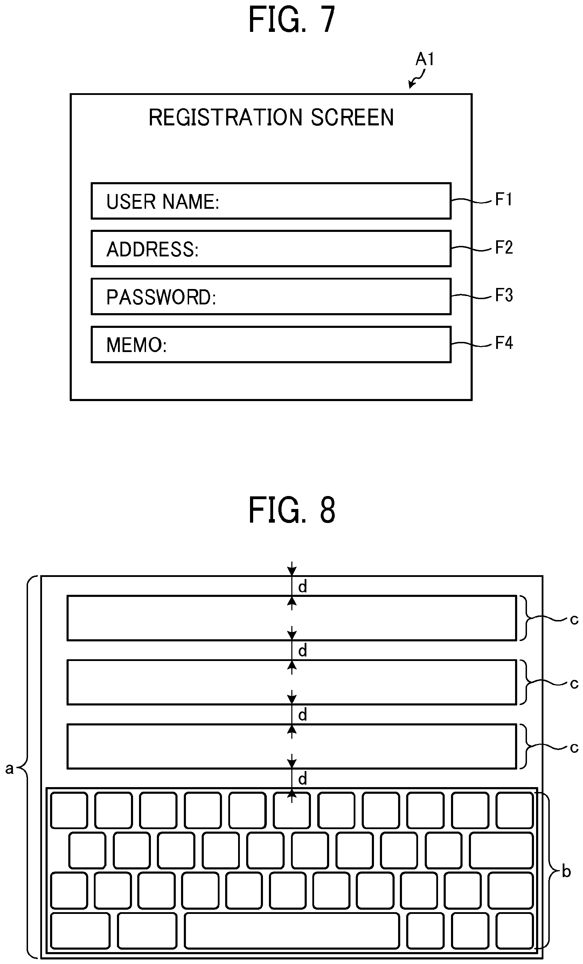

The data processing unit 152 includes, for example, a table T (FIG. 5) for managing a plurality of pieces of information as one group. FIG. 5 illustrates an example of the table T that sets a plurality of input fields. Each of the input fields in FIG. 5 corresponds to screen definition information, such as user name, address, password, and memo, respectively set as input fields F1 to F4 in a registration screen A1 (FIG. 7) to be described later. The table T (FIG. 5) manages the plurality of input fields related or associated with each other, which are the input fields that are required to be input with respective field information together as one group. In an example case in FIG. 5, a user name, an address, and a password are managed as one same group. As indicated in table T (FIG. 5), the user name, the address, and the password are associated with each other by setting "1."

The data storage unit 153 stores data processed by the data processing unit 152 in a storage unit such as the RAM 23 or the flash memory 24.

In this example case, the control unit 150, the communication unit 151, the data processing unit 152, the data storage unit 153, and the data storage unit are implemented using software, but some or all of the control unit 150, the communication unit 151, the data processing unit 152, and the data storage unit 153 can be implemented using a hardware resource, such as an integrated circuit (IC).

Further, the home application 130 can be recorded on a recording medium readable by a computer device, such as compact disk ROM (CD-ROM), flexible disk (FD) or the like in an installable format file or an executable format file. Further, the home application 130 can be recorded on a recording medium readable by a computer device, such as CD-R, digital versatile disk (DVD), Blu-ray disc (registered trademark), a semiconductor memory, or the like. Further, the home application 130 can be installed on a manner that the home application 130 is installed via a network such as the Internet. Further, the home application 130 can be installed on a ROM in the apparatus in advance.

Display Operation of User Registration Screen of Home Application:

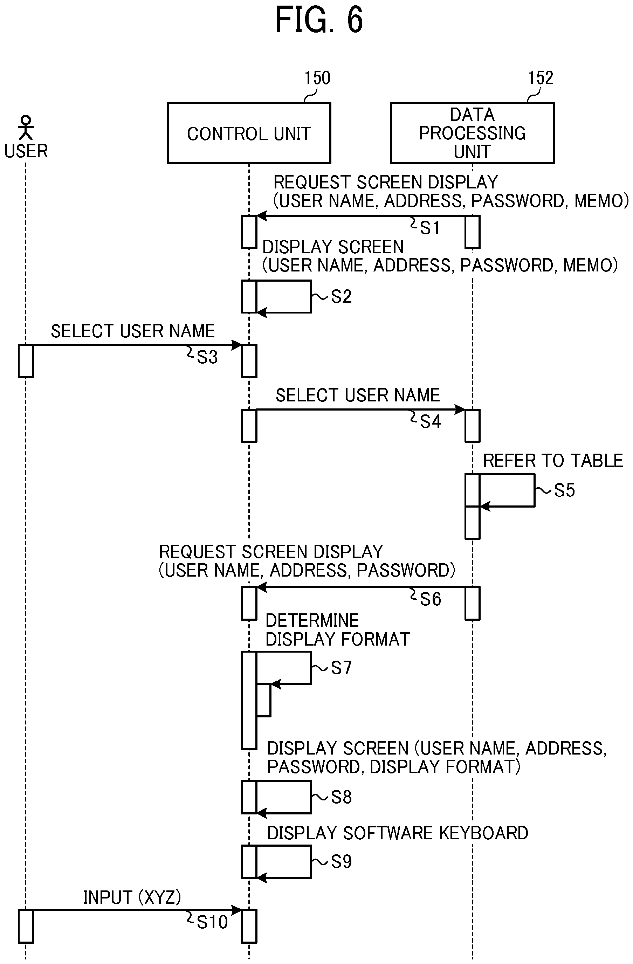

Hereinafter, a description is given of an operation of displaying the registration screen of the home application 130. FIG. 6 is an example of a sequence diagram illustrating a flow of an operation of each unit when displaying the registration screen.

As illustrated in FIG. 6, at a given timing when registration is required, the data processing unit 152 notifies a request for displaying a registration screen (a screen display request of a registration screen) to the control unit 150 (step S1). In step S1, the control unit 150 acquires the screen definition information, such as user name, address, password, and memo, as the screen display request of the registration screen.

Then, the control unit 150 displays the registration screen based on the acquired screen definition information, such as user name, address, password, and memo (step S2).

FIG. 7 illustrates an example of the registration screen A1. As illustrated in FIG. 7, the registration screen A1 includes input fields F1 to F4 respectively corresponding to the screen definition information, such as user name, address, password, and memo.

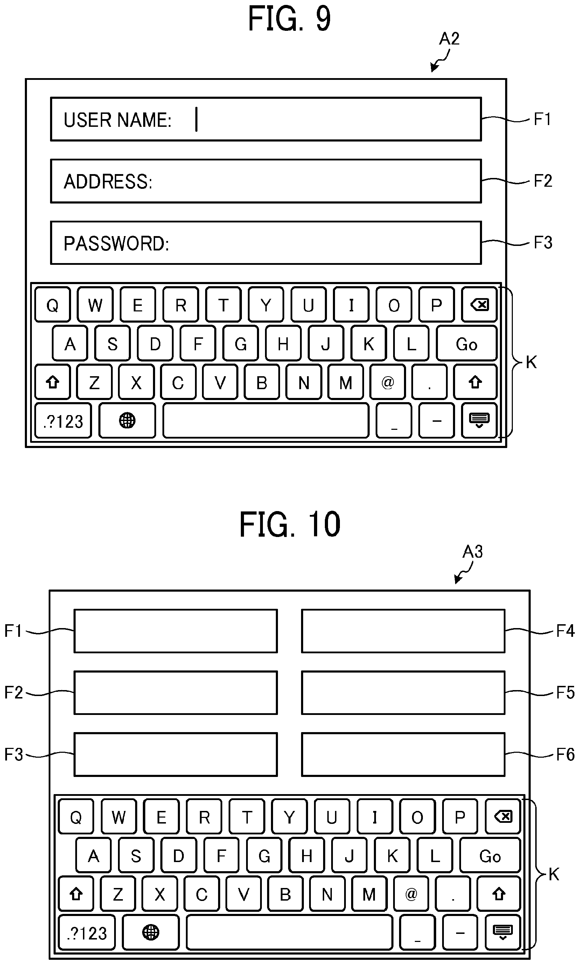

In this example case, it is assumed that a user selects the input field F1 used for inputting a user name (step S3). Hereinafter, the input field F1 may be also referred to as the user name input field F1. In step S3, the input field F1 requires a display of a software keyboard K (see FIG. 9), which will be described later.

If the user selects the user name input field F1, the control unit 150 notifies the data processing unit 152 that the user name input field F1 is selected (step S4).

In response to receiving the notification of selection of the user name input field F1, the data processing unit 152 refers to the table T to acquire the screen definition information (e.g., user name, address, and password) associated as the same group (step S5).

Then, the data processing unit 152 transmits a display request of the input fields corresponding to the screen definition information (e.g., user name, address, and password) associated as the same group, which is acquired by referring to the table T, to the control unit 150 (step S6).

Then, the control unit 150 determines a display format of the input fields corresponding to the screen definition information, such as user name, address, and password on the screen (step S7). For example, the control unit 150 determines the display format, such as reducing a size of display contents (e.g., user name, address, password) and reducing a space between the display contents in a display area in a screen based on a size of the display area in the screen and the size of the display contents.

Hereinafter, a description is given of an example method of determining the display format on a screen. FIG. 8 illustrates an example of a scheme of determining the display format on the screen. In an example case in FIG. 8, a clearance "d" between the plurality of input fields, adjacent to each other, is adjusted. The control unit 150 calculates the clearance "d" between the input fields using the below formula (1).

$$d = (a - b - (c \times n))/(n + 1)\ldots(1)$$

wherein

     d: space between input fields
     a: width of display area
     b: width of software keyboard
     c: width of input field
     n: number of input fields

By calculating the clearance "d" between the plurality of input fields using the above formula (1), the space between the plurality of input fields corresponding to the display contents can be reduced in the display area based on the size of the display area and the size of the display contents.

Further, if the width of the input field corresponding to the display contents (e.g., user name, address, password) is reduced based on the size of the display area of the screen and the size of the display contents, the control unit 150 calculates the width "c" of the input field using the below formula (2).

$$c = (a - b - d(n + 1))/n\ldots(2)$$

wherein

     c: width of input field
     a: width of display area
     b: width of software keyboard
     d: space between input fields
     n: number of input fields

By calculating the width "c" of the input field using the above formula (2), the width of the input field corresponding to the display contents (e.g., user name, address, password) can be reduced in the display area of the screen based on the size of the display area and the size of the display contents.

Then, the control unit 150 displays the input fields corresponding to the screen definition information, such as user name, address, and password, in accordance with the display format determined in step S7 (step S8) and displays the software keyboard (step S9).

FIG. 9 illustrates an example of a registration screen A2. As illustrated in FIG. 9, the registration screen A2 includes the input fields F1 to F3 respectively corresponding to the screen definition information, such as user name, address, and password while the software keyboard K is displayed on the registration screen A2. As to the registration screen A2, when the input field F1 is an input target, a size, a position and a margin between the input fields for the input field F2 and the input field F3 associated with the input target (i.e., input field F1) are controlled, and a list of the input fields F1, F2 and F3 associated as one group is displayed together with the software keyboard K.

As to the registration screen A2 illustrated in FIG. 9, when the input field F1 is the input target, the associated input field F2 and input field F3 are not hidden by the software keyboard K, and thereby the user can directly input field information into any one of the input fields F1, F2, and F3.

After inputting the field information into the input field F1, the user selects the associated input field F2 or input field F3 and starts an input of the field information into the input field F2 or input field F3 while the software keyboard K is being displayed (step S10).

In this way, in the first embodiment, when a user selects one input field (first input field) that is required to be input with the field information, another input field(s) (second input field) that is required to be input with the field information can be displayed together with the one input field (first input field) on the same screen without being hidden by the software keyboard being displayed on the same screen (without interfering with the software keyboard K).

Further, in step S10 of the sequence in FIG. 6, when a value of the field information is input into the input field requiring the display of the software keyboard K, using the software keyboard K, a selection of the next input field or a selection of closing the software keyboard K can be received.

Further, if the number of input fields associated with one input field selected by the user, both requiring the display of the software keyboard K, is large, the width of the input fields can be set smaller to arrange the input fields in a parallel on the screen as illustrated in FIG. 10. FIG. 10 illustrates an example of a registration screen A3. As illustrated in FIG. 10, the registration screen A3 includes input fields F1 to F6 arranged in two columns, and the software keyboard K is displayed on the registration screen 3. As to the registration screen A3, when the input field F1 is the input target, the list of the input fields F1 to F6 associated with the input target is displayed together with the software keyboard K.

Second Embodiment:

Hereinafter, a description is given of a second embodiment. Different from the first embodiment, in the second embodiment, when the input fields and the software keyboard K are to be displayed on a registration screen, each input field corresponding to each display target item is determined based on an attribute of a given language, such as hypertext markup language (HTML), in which the language defines a display format of the input fields on the registration screen. In the description of the second embodiment, descriptions of the same parts as those of the first embodiment will be omitted, and the points different from the first embodiment will be described.

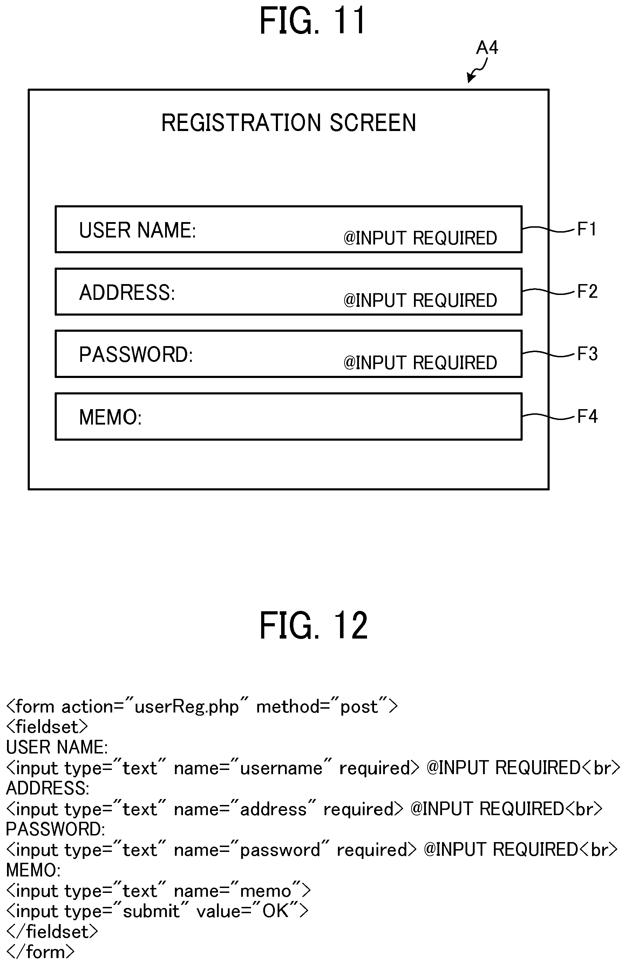

FIG. 11 illustrates an example of a registration screen A4 according to the second embodiment. As illustrated in FIG. 11, the registration screen A4 includes the input fields F1 to F4 respectively corresponding to the screen definition information, such as user name, address, password, and memo. Further, as illustrated in FIG. 11, "@input required" is displayed in the input fields F1 to F3 to indicate that input fields F1 to F3 are the items that are required to be input with the field information.

FIG. 12 illustrates am example of HTML description for the input fields F1 to F4 illustrated in FIG. 11. As illustrated in FIG. 12, each item written with "required" as an attribute of HTML is the item that is required to be input with the field information.

In the second embodiment, the control unit 150 does not require referencing of the table T by the data processing unit 152, but the control unit 150 determines whether the attribute of "required" is set in the input fields F1 to F4, and then determines the input fields set with the attribute of "required" as the input fields associated as one group. That is, in an example case in FIG. 11, the input fields F1 to F3 are referred to as the associated input fields.

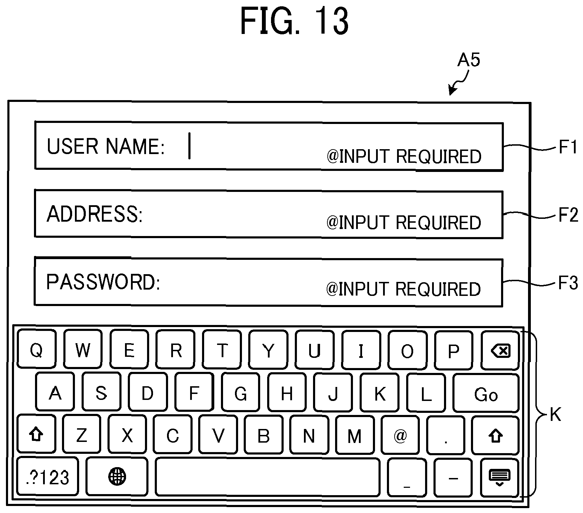

FIG. 13 illustrates an example of a registration screen A5 according to the second embodiment. As illustrated in FIG. 13, the registration screen A5 includes the input fields F1 to F3 respectively corresponding to the screen definition information, such as user name, address, and password displaying "@input required" and the software keyboard K is being displayed on the registration screen A5. As to the registration screen A5, the size, the position and the margin between the input fields F1 to F3 displaying "@input required" are controlled, and the list of the input fields of F1, F2, and F3 displaying "@input required" is displayed together with the software keyboard K.

In this way, in the second embodiment, the input field (first input field) selected by the user that is required to be input with the field information can be displayed together with another associated input field (second input field) that is required to be input with the field information on the same screen without being hidden by the software keyboard being displayed on the same screen (without interfering with the software keyboard K).

In the above described first and second embodiments, the image forming apparatus is described using a multifunction apparatus including at least two functions of a copying function, a printer function, a scanner function, and a facsimile function, but not limited thereto. For example, the above described embodiments can be applied to any image forming apparatus such as a copier, a printer, a scanner, a facsimile machine, or the like.

Further, in addition to the image forming apparatus, the above described embodiments can be applied to smart phones, tablet PCs, notebook PCs having a touch panel function, and home electrical appliances such as televisions using the software keyboard for inputting information into the input fields.

Conventionally, a key for receiving an instruction for changing an input field (input object) to the next input field is displayed together with a software keyboard.

However, the sequential order of input fields that transit according to the key operation on the software keyboard is pre-set. That is, even if a certain input field is not required to be input with field information, the certain input field is displayed.

As to the above described embodiment, a plurality of input fields that requires an input of field information can be displayed with a software keyboard on the same screen without being hidden by the software keyboard being displayed on the same screen or without interfering with the software keyboard.

Numerous additional modifications and variations are possible in light of the above teachings. It is therefore to be understood that, within the scope of the appended claims, the disclosure of this patent specification may be practiced otherwise than as specifically described herein.

Any one of the above-described operations may be performed in various other ways, for example, in an order different from the one described above.

As described above, the present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

**Claims**

1. An operation apparatus (20) comprising:

a display (27) configured to display a screen to include a plurality of input fields to receive an input of field information into each of the plurality of input fields; and

a processor (21) configured to receive a selection of a first input field selected from the plurality of input fields, the first input field to be input with first field information using a software keyboard displayable on the screen; determine a second input field associated with the first input field selected from the plurality of input fields, the second input field required to be input with second field information; and display, in response to receiving the selection of the first input field, the software keyboard, the first input field that is required to be input with the first field information and the second input field that is required to be input with the second field information together on the screen without being hidden by the software keyboard being displayed on the screen.

2. The operation apparatus (20) according to claim 1, wherein the processor (21) obtains, from a memory, group information that groups two or more input fields that are required to be input with the field information collectively, and determines, based on the group information, the second input field associated with the selected first input field.

3. The operation apparatus (20) of claim 1 or 2, wherein the processor (21) determines the second input field that is required to be input with the second field information together with the selected first input field that is required to be input with the first field information based on an attribute of a language defining a display format on the screen.

4. The operation apparatus (20) according to claim 1, 2 or 3, wherein the processor (21) controls a margin between the plurality of input fields adjacent to each other on the screen.

5. The operation apparatus (20) according to any one preceding claim, wherein the processor (21) controls a size of each one of the plurality of input fields on the screen.

6. The operation apparatus (20) according to any one preceding claim, wherein the processor (21) controls a position of each one of the plurality of input fields on the screen.

7. The operation apparatus (20) according to any one preceding claim, wherein, in response to an input of a value of the first field information into the selected first input field using the software keyboard, the processor (21) receives any one of a selection of the next input field and a closing of the software keyboard.

8. An image forming apparatus (1) comprising:

an operation apparatus (20) including a display (27) configured to display a screen to include a plurality of input fields to receive an input of field information into each of the plurality of input fields; and

a processor (21) configured to receive a selection of a first input field selected from the plurality of input fields, the first input field to be input with first field information using a software keyboard displayable on the screen; determine a second input field associated with the first input field selected from the plurality of input fields the second input field required to be input with second field information; and display, in response to receiving the selection of the first input field, the software keyboard, the first input field that is required to be input with the first field information and the second input field that is required to be input with the second field information together on the screen without being hidden by the software keyboard being displayed on the screen.

9. The image forming apparatus (1) according to claim 8, wherein the processor (21) obtains, from a memory, group information that groups two or more input fields that are required to be input with the field information collectively, and determines, based on the group information, the second input field associated with the selected first input field.

10. The image forming apparatus (1) according to claim 8 or 9, wherein the processor (21) determines the second input field that is required to be input with the second field information together with the selected first input field that is required to be input with the first field information based on an attribute of a language defining a display format on the screen.

11. The image forming apparatus (1) according to claim 8, 9 or 10, wherein the processor (21) controls a margin between the plurality of input fields adjacent to each other on the screen.

12. The image forming apparatus (1) according to any one of claims 8 to 11, wherein the processor (21) controls a size of each one of the plurality of input fields on the screen.

13. The image forming apparatus (1) according to any one of claims 8 to 12, wherein the processor (21) controls a position of each one of the plurality of input fields on the screen.

**14.** The image forming apparatus (1) according to any one of claims 8 to 13, wherein, in response to an input of a value of the first field information into the selected first input field using the software keyboard, the processor (21) receives any one of a selection of the next input field and a closing of the software keyboard.

**15.** A method of displaying a screen to include a plurality of input fields to receive an input of field information into each of the plurality of input fields, the method comprising:

receiving (S3, S4) a selection of a first input field selected from the plurality of input fields, the first input field to be input with first field information using a software keyboard displayable on the screen;

determining (S5) a second input field associated with the first input field selected from the plurality of input fields the second input field required to be input with second field information; and

displaying (S8, S9) in response to receiving the selection of the first input field, the software keyboard, the first input field that is required to be input with the first field information and the second input field that is required to be input with the second field information together on the screen without being hidden by the software keyboard being displayed on the screen.

# FIG. 1

EP 3 543 836 A1

# FIG. 2

# FIG. 3

**MAIN UNIT** — 10

**APPLICATION LAYER** — 101

| COPY APPLICATION — 111 | SCANNER APPLICATION — 112 | PRINTER APPLICATION — 113 | FACSIMILE (FAX) APPLICATION — 114 |

**SERVICE LAYER** — 102

| ENERGY SAVING MANAGEMENT PROGRAM — 121 | MEMORY MANAGEMENT PROGRAM — 122 | CONTROLLER CONTROL PROGRAM — 123 |

**OS LAYER** — 103

**OPERATION UNIT** — 20

**APPLICATION LAYER** — 201

| COPY APPLICATION — 131 | SCANNER APPLICATION — 133 | PRINTER APPLICATION — 134 | FAX APPLICATION — 135 |

| HOME APPLICATION — 130 | ERROR MANAGEMENT APPLICATION — 140 | FUNCTION PROVIDING APPLICATION — 136 | VENDOR APPLICATION — 137 |

**OS LAYER** — 203

# FIG. 4

┌20

OPERATION UNIT

┌150      ┌152      ┌151

| CONTROL UNIT | DATA PROC-ESSING UNIT | COMMUNI-CATION UNIT |

┌153

DATA STORAGE UNIT

# FIG. 5

T

| INPUT FIELD | GROUP |
|---|---|
| USER NAME | 1 |
| ADDRESS | 1 |
| PASSWORD | 1 |
| MEMO | – |

# FIG. 6

# FIG. 7

A1

REGISTRATION SCREEN

| USER NAME: | F1 |
| ADDRESS: | F2 |
| PASSWORD: | F3 |
| MEMO: | F4 |

# FIG. 8

# FIG. 9

A2

USER NAME: | ————— F1

ADDRESS: ————— F2

PASSWORD: ————— F3

| Q | W | E | R | T | Y | U | I | O | P | ⌫ |
| A | S | D | F | G | H | J | K | L | Go |
| ⇧ | Z | X | C | V | B | N | M | @ | . | ⇧ |
| .?123 | 🌐 | | | _ | – | ⌨ |

K

# FIG. 10

A3

F1 ————— ————— F4

F2 ————— ————— F5

F3 ————— ————— F6

| Q | W | E | R | T | Y | U | I | O | P | ⌫ |
| A | S | D | F | G | H | J | K | L | Go |
| ⇧ | Z | X | C | V | B | N | M | @ | . | ⇧ |
| .?123 | 🌐 | | | _ | – | ⌨ |

K

# FIG. 11

A4

REGISTRATION SCREEN

| USER NAME: | @INPUT REQUIRED | F1 |

| ADDRESS: | @INPUT REQUIRED | F2 |

| PASSWORD: | @INPUT REQUIRED | F3 |

| MEMO: | | F4 |

# FIG. 12

```
<form action="userReg.php" method="post">
<fieldset>
USER NAME:
<input type="text" name="username" required> @INPUT REQUIRED<br>
ADDRESS:
<input type="text" name="address" required> @INPUT REQUIRED<br>
PASSWORD:
<input type="text" name="password" required> @INPUT REQUIRED<br>
MEMO:
<input type="text" name="memo">
<input type="submit" value="OK">
</fieldset>
</form>
```

# FIG. 13

A5

USER NAME: |        @INPUT REQUIRED    F1

ADDRESS:        @INPUT REQUIRED    F2

PASSWORD:        @INPUT REQUIRED    F3

| Q | W | E | R | T | Y | U | I | O | P | ⌫ |
|---|---|---|---|---|---|---|---|---|---|---|
| A | S | D | F | G | H | J | K | L | Go | |
| ⇧ | Z | X | C | V | B | N | M | @ | . | ⇧ |
| .?123 | 🌐 | | | | | _ | – | ⌨ | | |

K

Europäisches Patentamt
European Patent Office
Office européen des brevets

# EUROPEAN SEARCH REPORT

Application Number

EP 19 15 4853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 032 394 A1 (SAMSUNG MEDISON CO LTD [KR]) 15 June 2016 (2016-06-15) * paragraph [0030] - paragraph [0050]; figures 2a-2c * | 1-15 | INV. G06F3/0484 G06F3/0488 |
| X | US 2011/302520 A1 (YUASA TOMONORI [JP] ET AL) 8 December 2011 (2011-12-08) * paragraph [0060] - paragraph [0075]; figures 4-7 * | 1-15 | |
| X | US 2011/285656 A1 (YAKSICK JEFFREY D [US] ET AL) 24 November 2011 (2011-11-24) * paragraph [0027] - paragraph [0045]; figure 1a * | 1-15 | |
| X | EP 1 536 316 A1 (SONY CORP [JP]) 1 June 2005 (2005-06-01) * paragraph [0035] - paragraph [0050]; figures 6,7 * | 1-15 | |
| X | US 2016/170547 A1 (ZHANG JIANBANG [US] ET AL) 16 June 2016 (2016-06-16) * paragraph [0035] - paragraph [0045]; figure 3a * | 1-15 | TECHNICAL FIELDS SEARCHED (IPC) G06F |
| X | US 2010/033439 A1 (KODIMER MARIANNE L [US] ET AL) 11 February 2010 (2010-02-11) * paragraph [0065] - paragraph [0080]; figures 11-14 * | 1-15 | |
| X | US 2016/370905 A1 (DISCO CORP [JP]) 22 December 2016 (2016-12-22) * paragraph [0026] - paragraph [0045]; figure 4 * | 1-15 | |

The present search report has been drawn up for all claims

| Place of search | Date of completion of the search | Examiner |
|---|---|---|
| Berlin | 11 July 2019 | de Mateo Garcia, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 15 4853

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2019

| Patent document cited in search report | | Publication date | Patent family member(s) | Publication date |
|---|---|---|---|---|
| EP 3032394 | A1 | 15-06-2016 | CN 105700802 A<br>EP 3032394 A1<br>KR 20160071228 A<br>US 2016170636 A1 | 22-06-2016<br>15-06-2016<br>21-06-2016<br>16-06-2016 |
| US 2011302520 | A1 | 08-12-2011 | CN 102270057 A<br>JP 5634135 B2<br>JP 2011254358 A<br>US 2011302520 A1 | 07-12-2011<br>03-12-2014<br>15-12-2011<br>08-12-2011 |
| US 2011285656 | A1 | 24-11-2011 | US 2011285656 A1<br>US 2012019540 A1<br>WO 2011146740 A2 | 24-11-2011<br>26-01-2012<br>24-11-2011 |
| EP 1536316 | A1 | 01-06-2005 | CN 1668994 A<br>EP 1536316 A1<br>JP 3630153 B2<br>JP 2004054589 A<br>KR 20050019906 A<br>US 2005248525 A1<br>WO 2004010276 A1 | 14-09-2005<br>01-06-2005<br>16-03-2005<br>19-02-2004<br>03-03-2005<br>10-11-2005<br>29-01-2004 |
| US 2016170547 | A1 | 16-06-2016 | DE 102015121873 A1<br>US 2016170547 A1 | 16-06-2016<br>16-06-2016 |
| US 2010033439 | A1 | 11-02-2010 | NONE | |
| US 2016370905 | A1 | 22-12-2016 | CN 106257393 A<br>DE 102016210207 A1<br>JP 6518141 B2<br>JP 2017004454 A<br>KR 20160148448 A<br>SG 10201604206X A<br>TW 201706828 A<br>US 2016370905 A1 | 28-12-2016<br>22-12-2016<br>22-05-2019<br>05-01-2017<br>26-12-2016<br>27-01-2017<br>16-02-2017<br>22-12-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016177816 A